# EUROPÄISCHE PATENTSCHRIFT

(11) **EP 2 279 103 B1**
(45) Veröffentlichungstag und Bekanntmachung des Hinweises auf die Patenterteilung: **08.02.2012**
(21) Anmeldenummer: 09799304.2
(22) Anmeldetag: 09.12.2009
(51) Int. Cl.: B60R 21/237

(54) **VERFAHREN UND VORRICHTUNG ZUM FALTEN EINES GASSACKES FÜR EIN AIRBAGMODUL**
METHOD AND DEVICE FOR FOLDING AN AIRBAG FOR AN AIRBAG MODULE
PROCÉDÉ ET DISPOSITIF DE PLIAGE D'UNE POCHE GONFLABLE POUR UN MODULE DE COUSSIN GONFLABLE

(30) Priorität: 10.12.2008 DE 102008061693
(43) Veröffentlichungstag der Anmeldung: 02.02.2011
(73) Patentinhaber: Takata-Petri AG, 63743 Aschaffenburg (DE)
(72) Erfinder: BUCHHOLZ, Andre, 10249 Berlin (DE); FRANKE, Dirk, 13187 Berlin (DE)
(74) Vertreter: Baumgärtel, Gunnar
(86) Internationale Anmeldenummer: PCT/EP2009/066735
(87) Internationale Veröffentlichungsnummer: WO 2010/066792

(56) Entgegenhaltungen:
- EP-A1- 1 243 479
- DE-A1- 19 535 564
- DE-A1- 19 702 799
- US-A1- 2006 138 762
- US-A1- 2008 194 393

## Beschreibung

Die Erfindung betrifft ein Verfahren zum Falten eines Gassackes für ein Airbagmodul nach dem Oberbegriff des Patentanspruchs 1 sowie eine Vorrichtung zur Durchführung eines solchen Verfahrens nach dem Oberbegriff des Anspruchs 8.

Hierbei wird ein Gassack auf einer Auflage angeordnet und neben dem (umlaufenden) äußeren Rand des auf der Auflage angeordneten Gassackes mindestens ein Raffelement vorgesehen, mittels dem der Gassack (von seinem äußeren Rand her in Richtung auf ein imaginäres Zentrum hin) zusammengerafft wird, indem das mindestens eine Falt- bzw. Raffelement unter Einwirkung auf den äußeren Rand des Gassackes entlang der Auflage in Richtung auf das Innere (z.B. das Zentrum) des auf der Auflage angeordneten Gassackes verfahren wird.

Derartige Faltverfahren sind als sogenannte Rafffaltungen bekannt, vergleiche DE 195 35 564 A1. Hierbei wird der zu faltende Gassack mittels mehrerer jeweils paarweise einander gegenüberliegender Raffelemente zu einem Gassackpaket zusammengerafft. Dies erfolgt innerhalb eines Faltraumes, der ein vorgegebenes Höhenprofil definiert, welches das bei der Rafffaltung gebildete Gassackpaket nach unten und nach oben begrenzt. Grundsätzlich kann eine Rafffaltung aber auch mit nur einem verfahrbaren Raffelement durchgeführt werden, etwa indem jenem Raffelement gegenüberliegend ein ortsfestes Widerlager angeordnet ist und das Raffelement zum Falten eines Gassackes unter Einwirkung auf den Rand des Gassackes auf jenes Widerlager zu bewegt wird.

Vorliegend steht von dem mindestens einen Raffelement ein Niederhalter ab, der beim Verfahren des Raffelementes entlang der Auflage gemeinsam mit dem Raffelement bewegt wird und hierbei einen Randbereich des Gassackes übergreift. US 2008/0194393 A1 zeigt den gattungsbildenden Stand der Technik.

Bei einem aus der US 2008/0194393 A1 bekannten Verfahren dieser Art ist im Zentrum der Auflage ein Gasgenerator angeordnet, der zum Aufblasen des zusammenzufaltenden Gassackes in einem Crash-Fall vorgesehen ist. Beim Zusammenfalten des Gassackes mittels zweier gegeneinander bewegbarer Paare von Raffelementen wird ein zentraler Bereich des Gassackes in Falten gelegt, die oberhalb des Gasgenerators verlaufen. Um zu verhindern, dass sich die weiteren, neben dem Gasgenerator bildenden Faltbereiche des zusammengerafften Gassackes in den oberhalb des Gasgenerators befindlichen Faltbereichen verfangen, werden bei dem bekannten Verfahren die neben dem Gasgenerator gebildeten Faltbereiche von den einem jeweiligen Raffelement zugeordneten Niederhaltern übergriffen und hierdurch deren Vorstehen bis zum Niveau der Faltbereiche oberhalb des Gasgenerators verhindert.

Der Erfindung liegt das Problem zugrunde, ein Verfahren zum Falten eines Gassackes der eingangs genannten Art weiter zu verbessern, insbesondere im Hinblick auf die Schaffung einer definierten Entfaltungscharakteristik des Gassackes.

Dieses Problem wird erfindungsgemäß durch die Schaffung eines Verfahrens mit den Merkmalen des Anspruchs 1 gelöst.

Danach ist vorgesehen, der Gassack vorgefaltet wird, bevor der mindestens eine gemeinsam mit dem Raffelement bewegbare Niederhalter hierauf einwirkt und dass der von dem mindestens einen Falt- bzw. Raffelement abstehende und gemeinsam mit diesem verfahrbare Niederhalter derart auf den zugeordneten Randbereich des vorgefalteten Gassackes einwirkt, dass am Randbereich des Gassackes durch Eindringen des Niederhalters ein Hinterschnitt gebildet wird.

Der Niederhalter ist dabei derart ausgebildet und steht derart von dem zugeordneten Raffelement ab, dass beim Eindringen des Niederhalters in den vorgefalteten, weiter zusammenzufaltenden Gassack und der damit verbundenen Erzeugung einer Einbuchtung (eines Hinterschnittes) jeweils ein Abschnitt des (vorgefalteten) Gassackes unterhalb des Niederhalters, d. h. zwischen dem Niederhalter und der Auflage, und ein anderer Abschnitt des (vorgefalteten) Gassackes oberhalb des Niederhalters, d. h. vor einer der Auflage abgewandten Oberfläche des Niederhalters, zu liegen kommt.

Hiermit können oberhalb bzw. unterhalb eines jeweiligen Niederhalters gezielt Gassackabschnitte gebildet werden, die sich beim Entfalten des Gassackes durch Einströmen von Gas aus einem zugeordneten Gasgenerator besonders frühzeitig oder alternativ erst mit Verzögerung entfalten, je nach dem wie der entsprechende Gassackabschnitt in Bezug auf den aus dem Gasgenerator austretenden Gasstrom sowie in Bezug auf eine Austrittsöffnung des fertigen Airbagmodules angeordnet ist.

Dabei ist der Gassack vor dem Zusammenraffen mittels der hierfür vorgesehenen Raffelemente nicht flach ausgebreitet auf der Auflage angeordnet; sondern der Gassack ist bereits vorgefaltet (teilweise zusammengelegt), bevor das oder die mit einem Niederhalter versehenen Raffelement(e) (zur Bildung einer Einbuchtung bzw. eines Hinterschnittes) hierauf einwirken.

Insbesondere kann der Gassack durch das Vorfalten entlang einer (ersten) Raumrichtung bereits auf eine Ausdehnung (Breite) begrenzt bzw. reduziert worden sein, die im Wesentlichen seiner endgültigen Ausdehnung entlang dieser Raumrichtung (nach Durchführung des vollständigen Faltverfahrens) entspricht, so dass der Gassack z.B. entlang dieser Richtung bereits in ein zu seiner Aufnahme vorgesehenes Modulgehäuse eines Airbagmoduls passt. Es ist dann nach Einwirkung des mindestens einen Niederhalters auf den Gassack bzw. auf dessen Rand keine weitere Faltung des Gassackes entlang der erstgenannten Raumrichtung mehr erforderlich, so dass eine jeweilige durch den Niederhalter gebildete Einbuchtung (Hinterschnitt) nicht durch spätere (zusätzliche) Faltschritte entlang jener (ersten) Raumrichtung beeinträchtigt werden kann.

Um beim Eindringen des Niederhalters in den (vorgefalteten) Gassack eine definierte, reproduzierbare Ausbildung eines Hinterschnittes am seitlichen Rand des Gassackes zu gewährleisten, wird am Raffelement, von dem der Niederhalter absteht, ein Endabschnitt des äußeren Randes des Gassackes festgelegt, und zwar insbesondere unterhalb oder oberhalb des Niederhalters.

Die Fixierung eines Endabschnittes des äußeren Randes des Gassackes am Raffelement kann dabei insbesondere mittels am Niederhalter vorgesehener Fixierelemente erreicht werden, z. B. mittels am Niederhalter vorgesehener Klemmelemente oder durch eine vertikal verschiebbare bzw. verschwenkbare Ausbildung des Niederhalters selbst, der hierdurch klemmend auf den entsprechenden Endabschnitt des Gassackes einwirken kann. Alternativ zur Verwendung zusätzlicher Fixierelemente bzw. zur verschiebbaren/verschwenkbaren Ausbildung des Niederhalters kann der Abstand zwischen Niederhalter und Auflage derart bemessen sein, dass eine Fixierung des äußeren Randes des Gassackes während des Einwirkens des Raffelementes gewährleistet ist.

Gemäß einer Weiterbildung der Erfindung sind dem zu faltenden Gassack mehrere verfahrbare Raffelemente zugeordnet, die zunächst neben dem umlaufenden äußeren Rand des Gassackes liegen und die zum Falten (Zusammenraffen) des Gassackes jeweils unter Einwirkung auf einen Randbereich des Gassackes in Richtung auf das Innere des Gassackes verfahren werden, und zwar entlang der Auflage, auf der der Gassack angeordnet ist. Dabei ist zumindest einem Teil der mehreren Raffelemente, also mindestens einem der Raffelemente, ein hiervon abstehender Niederhalter zugeordnet, der beim Einwirken auf den Gassack in das sich dabei bildende Gassackpaket eindringt und einen Hinterschnitt ausbildet.

Hierbei können insbesondere jeweils zwei Raffelemente einander paarweise gegenüberliegend angeordnet sein, so dass diese beim Falten des Gassackes aufeinander zu bewegt werden. Vorteilhaft weist bei zumindest einem Paar einander gegenüberliegender Raffelemente jedes der beiden Raffelemente jeweils einen Niederhalter auf, der hiervon absteht.

Sind beispielsweise insgesamt vier Raffelemente vorgesehen, die jeweils einander gegenüberliegend angeordnet sind und beim Falten des Gassackes aufeinander zu bewegt werden, so lässt sich hiermit ein Faltraum nach vier Seiten begrenzen, also insbesondere in allen Raumrichtungen entlang der Auflage, auf der der zu faltende Gassack angeordnet ist und entlang der die Raffelemente zum Falten des Gassackes bewegt werden.

Falls demgegenüber nur zwei einander gegenüberliegende Raffelemente vorgesehen sind, die beim Falten des Gassackes aufeinander zu bewegt werden, so wird hiermit der Faltraum für den zu faltenden Gassack nur entlang zweier (einander entgegengesetzter) Raumrichtungen begrenzt, die entlang der Auflage für den Gassack verlaufen. Für eine Begrenzung des Faltraumes entlang der hierzu senkrechten Raumrichtungen, jedoch gleichzeitig entlang der Auflage, können in diesem Fall zusätzliche (nicht als Raffelemente ausgebildete) seitliche Begrenzungselemente des Faltraumes dienen.

Um weiterhin ein bestimmtes Höhenprofil zu definieren, innerhalb dessen der Gassack beim Verfahren der Raffelemente gefaltet (zusammengerafft) wird, ist der Auflage gegenüberliegend eine Abdeckung angeordnet, welche den Faltraum nach oben begrenzt, also entlang einer Richtung weg von der Auflage für den Gassack, so dass letzterer beim Verfahren der Raffelemente zwischen der Auflage und der Abdeckung zusammengerafft wird, so dass also die Auflage und die Abdeckung das Höhenprofil definieren, innerhalb dessen das Zusammenfalten des Gassackes erfolgt.

Ein Hauptzweck des Zusammenfaltens bzw. Zusammenraffens eines Gassackes zu einem Gassackpaket besteht darin, den Gassack in einem Modulgehäuse unterbringen zu können, innerhalb dessen der Gassack dann in ein Kraftfahrzeug einbaubar ist. Vorliegend wird das Modulgehäuse vorteilhaft unterhalb der Auflage für den Gassack angeordnet, z. B. in einer unterhalb der Auflage vorgesehene Aufnahme, wobei die Auflage oberhalb der Aufnahme eine Öffnung aufweist, so dass die Aufnahme mit dem Modulgehäuse von oberhalb der Auflage her zugänglich ist.

Indem in die Abdeckung, welche den Faltraum nach oben hin begrenzt, ein in vertikaler Richtung, d. h. im Wesentlichen senkrecht zur Auflage, verfahrbarer Stempel integriert ist, kann dieser genutzt werden, um den zusammengerafften Gassack abschließend in das in das unterhalb der Auflage angeordnete Modulgehäuse zu drücken, wobei in jenem Gehäuse bereits der zum Aufblasen des Gassackes dienende Gasgenerator vorgesehen sein kann. Der Gassack kann dabei schon vor dem Faltprozesses an dem Modulgehäuse vorfixiert sein.

So kann der Gassack beispielsweise bereits vor dem Anordnen auf der Auflage bzw. in dem Faltraum, z. B. durch ein oder mehrfaches Umschlagen oder durch Rollen, vorgefaltet sein. Andererseits kann der Gassack auch erst nach dem Anordnen auf der Auflage bzw. in dem Faltraum vorgefaltet werden, z. B. indem zunächst Faltelemente ohne Niederhalter hierauf einwirken, bevor anschließend mit einem Niederhalter versehene Raffelemente zum Zusammenfalten des Gassackes eingesetzt werden. Hierbei kann konkret vorgesehen sein, dass der Gassack zunächst auf eine längliche, längserstreckte Form vorgefaltet wird, bevor mindestens ein mit einem Niederhalter versehenes Raffelement hierauf einwirkt, und zwar insbesondere auf eine jeweilige Stirnseite des längserstreckt vorgefalteten Gassackes, welcher sich zwischen zwei Stirnseiten erstreckt.

Sofern der Gassack vorgefaltet worden ist, bevor mindestens ein mit einem Niederhalter versehenes Raffelement hierauf einwirkt, wird unter dem äußeren Rand des Gassackes, neben dem das oder die Raffelement(e) angeordnet sind und auf welchen das bzw. die Raffelement(e) einwirken, nicht der äußere Rand des flach ausgebreiteten Gassackes verstanden, sondern vielmehr der äußere Rand des bereits vorgefalteten Gassackes, so wie er auf der Auflage angeordnet ist.

D. h., unter dem äußeren Rand des auf der Auflage angeordneten Gassackes wird jeweils eine entlang der Auflage ringförmig umlaufende seitliche Begrenzung des Gassackes in der Form verstanden, in der der Gassack in dem Moment vorliegt, indem mindestens ein Raffelement und ein zugeordneter Niederhalter hierauf einwirken.

Das erläuterte Verfahren ist besonders geeignet zur Faltung eines Gassackes für ein sogenanntes Knie-Airbagmodul, d. h. für ein Airbagmodul, dessen Gassack zum Schutz der Knie eines in einem Kraftfahrzeug sitzenden Fahrzeuginsassen aufblasbar ist.

Eine Vorrichtung, die insbesondere zur Durchführung des erfindungsgemäßen Verfahrens dienen kann, wird durch die Merkmale des Anspruchs 8 charakterisiert. Vorteilhafte Ausgestaltungen dieser Vorrichtung sind in den hiervon abhängigen Ansprüchen angegeben.

Ein erfindungsgemäß gefaltetes Gassackpaket ist durch die Merkmal des Anspruchs 14 charakterisiert.

Weitere Einzelheiten und Vorteile der Erfindung werden bei der nachfolgenden Beschreibung von Ausführungsbeispielen anhand der Figuren deutlich werden.

Es zeigen:
- Fig. 1A: eine Draufsicht auf eine Faltvorrichtung zum Falten eines auf einer Auflage angeordneten Gassackes zusammen mit dem zu faltenden Gassack;
- Fig. 1 B: einen Längsschnitt durch die Vorrichtung aus Figur 1A;
- Fig. 2A: die Vorrichtung aus Figur 1A nach einem Vorfalten des zu faltenden Gassackes;
- Fig. 2B: einen Längsschnitt durch die Anordnung aus Figur 2A;
- Fig. 3A: die Anordnung aus Figur 2A nach Herstellung einer seitlichen sowie einer oberen Begrenzung eines Faltraumes für den zu faltenden Gassack;
- Fig. 3B: einen Längsschnitt durch die Anordnung aus Figur 3A;
- Fig. 4A: die Anordnung aus Figur 3A nach einem Verfahren einander gegenüberliegender Raffelemente mit hiervon abstehenden Niederhaltern zum Falten des Gassackes;
- Fig. 4B: einen Längsschnitt durch die Anordnung aus Figur 4A;
- Fig. 5A: die Anordnung aus Figur 4A nach einem Einfahren der an den Raffelementen vorgesehenen Niederhalter;
- Fig. 5B: einen Längsschnitt durch die Anordnung aus Figur 5A;
- Fig. 6: die Anordnung aus Figur 5B beim Eindrücken des zusammengefalteten Gassackes in ein unterhalb der Auflage für den Gassack angeordnetes Modulgehäuse mittels eines Packstempels;
- Fig. 7A: eine Draufsicht auf die Anordnung aus Figur 6 nach dem Freigeben des Modulgehäuses mit dem darin verstauten Gassack;
- Fig. 7B: einen Längsschnitt durch die Anordnung aus Figur 7A;
- Fig. 8A: eine erste Variante zum Vorfalten des Gassackes;
- Fig. 8B: eine zweite Variante zum Vorfalten des Gassackes;
- Fig. 8C: eine dritte Variante zum Vorfalten des Gassackes;
- Fig. 9A: ein erstes Ausführungsbeispiel von Fixiermitteln zum Fixieren eines Randbereiches des Gassackes an einem Raffelement;
- Fig. 9B: ein zweites Ausführungsbeispiel von Fixiermitteln zum Fixieren eines Randbereiches des Gassackes an einem Raffelement;
- Fig. 9C: ein drittes Ausführungsbeispiel von Fixiermitteln zum Fixieren eines Randbereiches des Gassackes an einem Raffelement;
- Fig. 10: eine Abwandlung des Ausführungsbeispiels der Figuren 1a bis 7b hinsichtlich der Anordnung der Randbereiches des Gassackes am jeweiligen Raffelement;
- Fig. 11: eine mögliche Einbaulage eines gefalteten, in einem Airbagmodul verstauten Gassackes in einem Kraftfahrzeug bei Anwendung als Knieschutz;
- Fig. 12A - 12C: das Entfalten eines Gassackes eines nach den Figuren 1a bis 7b gefalteten Gassackes bei einem Einbau gemäß Figur 11.

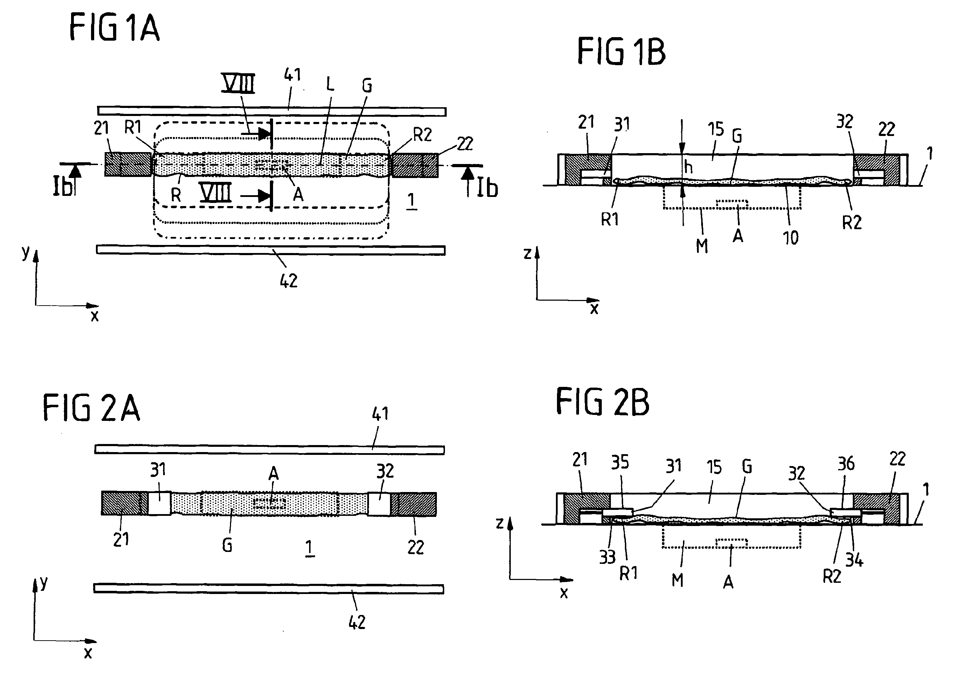

In den Figuren 1A und 1B ist in einer Draufsicht (Figur 1A) sowie in einem Längsschnitt (Figur 1 B) eine Faltvorrichtung zum Falten eines Gassackes G dargestellt, der auf einer im Ausführungsbeispiel im Wesentlichen ebenen Auflage 1 der Faltvorrichtung angeordnet ist. Bei der Auflage 1 kann es sich insbesondere um eine Oberfläche eines Falttisches handeln.

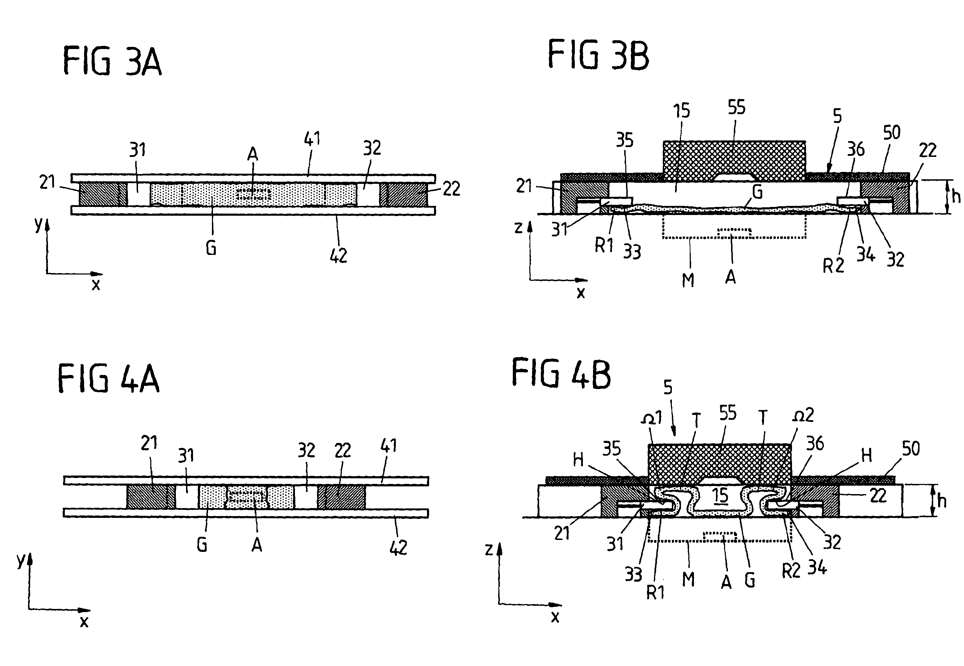

Die Faltvorrichtung definiert einen Faltraum 15, in dem der zu faltende Gassack G zu einem Gassackpaket zusammengerafft werden soll. Der Faltraum 15 ist - entlang der senkrecht auf die Auflage 1 verlaufenden vertikalen Achse z betrachtet - nach unten hin durch die Auflage 1 und nach oben hin durch eine in Figur 3B erkennbare Abdeckung 5 begrenzt. Die Auflage 1 und die Abdeckung 5 definieren ein bestimmtes Höhenprofil, innerhalb dessen der zu faltende Gassack G zu einem Gassackpaket zusammenzuraffen ist. Vorliegend ist die Höhe h, gemessen als der vertikale Abstand zwischen Auflage 1 und Abdeckung 5 im Wesentlichen konstant, so dass der Faltraum 15 eine im Wesentlichen ortsunabhängige Höhe h aufweist. Es können jedoch auch andere, kompliziertere Höhenprofile vorgesehen sein. (In dem in den Figuren 1A und 1 B gezeigten Zustand ist die Abdeckung 5 noch nicht in die in Figur 3B gezeigte Position abgesenkt worden, in der sie den Faltraum 15 bestimmungsgemäß nach oben begrenzt, um zunächst das Anordnen des Gassackes G auf der Auflage 1 im Faltraum 15 zu ermöglichen.)

Im Ergebnis begrenzen die Auflage 1 und die Abdeckung 5 den Faltraum 15 entlang beider senkrecht zur Auflage 1 verlaufender Raumrichtungen -z und z und legen hierdurch das Höhenprofil fest.

Entlang der übrigen, sich im Wesentlichen entlang der Auflage 1 erstreckenden Raumrichtungen x, -x, y und -y wird der Faltraum 15 demgegenüber durch zwei in Längsrichtung x zueinander verfahrbare Raffelemente 21, 22 sowie durch zwei entlang der horizontalen Querrichtung y zueinander verfahrbare seitliche Begrenzungselemente 41, 42 begrenzt.

Die beiden Raffelemente 21, 22 sind dabei entlang der parallel zur Auflage 1 verlaufenden Längsachse x einander gegenüberliegend und entlang jener Achse gegeneinander verfahrbar angeordnet, um den auf der Auflage 1 im Faltraum 15 befindlichen Gassack G zu einem Gassackpaket zusammenfalten zu können.

Die beiden seitlichen Begrenzungselemente 41, 42 liegen einander entlang der horizontalen Querachse y gegenüber, welche ebenfalls parallel zur Auflage 1 verläuft, dabei jedoch senkrecht zur Längsachse x. Die beiden seitlichen Begrenzungselemente 41, 42 sind ebenfalls entlang der Achse (y), entlang der sie einander gegenüberliegen, zueinander bewegbar, jedoch vorliegend nicht zum Zusammenfalten des Gassackes G sondern um die Breite des Faltraumes 15 variabel einstellen zu können. In einer abgewandelten Ausführungsform können die seitlichen Begrenzungselemente 41, 42 aber durchaus auch als Raffelemente ausgebildet sein, die zum Zusammenraffen des Gassackes G auf diesen einwirken.

Unterhalb eines zentralen Bereiches der Auflage 1 (im Ausführungsbeispiel in etwa mittig zwischen den beiden Raffelementen 21, 22 sowie den beiden seitlichen Begrenzungselementen 41, 42) ist ein Freiraum vorgesehen, in dem ein Modulgehäuse M mit einer eingefügten Aufblaseinrichtung A (Gasgenerator) und einem dieser zugeordneten Befestigungs- bzw. Gasverteilungsvorrichtung (Diffusor) aufgenommen ist, wobei Letztere auch zur Festlegung des Gassackes G am Modulgehäuse M ausgebildet sein können. Alternativ kann die Aufblaseinrichtung A auch außerhalb des Modulgehäuses M angeordnet sein.

Das Modulgehäuse M dient zur Aufnahme des Gassackes G, nachdem dieser mittels der in den Figuren 1A und 1B dargestellten Faltvorrichtung bestimmungsgemäß zu einem Gassackpaket zusammengefaltet worden ist. Um den zusammengefalteten Gassack schließlich in dem Modulgehäuse M verstauen zu können, weist die Auflage 1 oberhalb des das Modulgehäuse M aufnehmenden Freiraumes eine Durchgangsöffnung 10 auf.

In Figur 1A sind anhand einer gestrichelten Linie, einer gepunkteten Linie und einer strichpunktierten Linie unterschiedliche Möglichkeiten der Anordnung eines zu faltenden Gassackes auf der Auflage 10 angedeutet, z. B. symmetrisch bezüglich der zwischen den beiden Raffelementen 21, 22 verlaufenden, parallel zur Längsachse x erstreckten Mittelachse L (gestrichelte Linie); asymmetrisch bezüglich jener Mittelachse L (gepunktete Linie); oder auch im Wesentlichen einseitig bezüglich jener Mittelachse L (strichpunktierte Linie).

Das Anordnen des Gassackes auf der Auflage 1, wie in den Figuren 1A und 1B dargestellt, wird hier dadurch ermöglicht, dass die seitlichen Begrenzungselemente 41, 42 in dem in den Figuren 1A und 1B gezeigten Zustand entlang der horizontalen Querachse y einen so großen Abstand aufweisen, dass der (zunächst flach ausgebreitete) Gassack hierzwischen aufgenommen werden kann. Entsprechendes gilt für den Abstand der Raffelemente 21, 22 entlang der Längsachse x.

Für eine definierte Fixierung des zu faltenden Gassackes G an der Auflage 1 kann dabei insbesondere vorgesehen sein, dass der Gassack G am unmittelbar unterhalb der Auflage 1 angeordneten Modulgehäuse M festgelegt ist.

Eine Besonderheit der in den Figuren 1A und 1 B dargestellten Faltvorrichtung besteht darin, dass an den Raffelementen 21, 22 jeweils ein Niederhalter 31 bzw. 32 vorgesehen ist, welcher im Ausführungsbeispiel sowohl bei einer Befestigung des Gassackes am jeweiligen Raffelement 21, 22 als auch bei der Formgebung des bei der Faltung entstehenden Gassackpaketes mitwirkt.

Dabei wird jedoch im Ausführungsbeispiel nicht der unmittelbar flach auf der Auflage 1 ausgebreitete Gassack, wie in Figur 1A in gestrichelter, gepunkteter sowie strichpunktierter Form dargestellt, mittels der Raffelemente 21, 22 zusammengefaltet; sondern der Gassack G wird vorher vielmehr durch Vorfalten in eine vorgefaltete (längserstreckte) Form überführt, wie in den Figuren 1A und 1 B jeweils gezeigt.

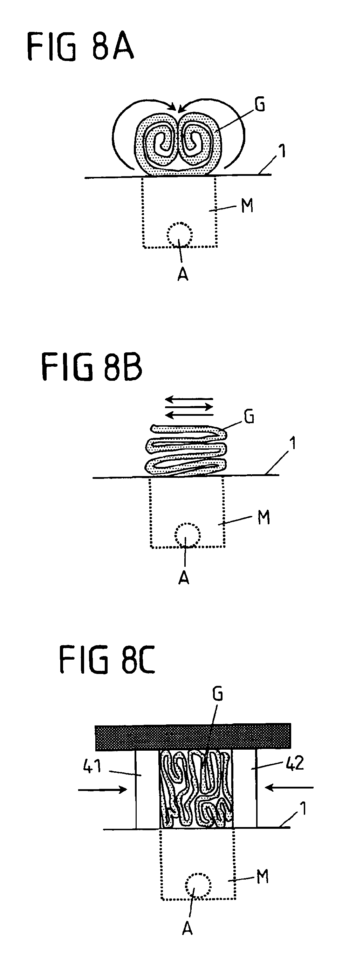

Unterschiedliche Ausführungsformen eines (längserstreckt) vorgefalteten Gassackes sind im Querschnitt in den Figuren 8A bis 8C jeweils im Querschnitt dargestellt, wobei der Gassack G entlang einer Richtung (y) der Vorfaltung auf eine solche Ausdehnung (Breite) reduziert ist, dass er hinsichtlich seiner Ausdehnung entlang dieser Richtung (y) bereits in ein zur Aufnahme des (fertig gefalteten) Gassackes G vorgesehenen Modulgehäuse M passt.

Gemäß Figur 8A ist der Gassack G entlang der horizontalen Querachse y zur Mittelachse L hin zusammengerollt worden, und zwar gleichmäßig von beiden Seiten beidseits der Mittelachse L her. Insbesondere bei einer einseitigen Anordnung des Gassackes bezüglich der Mittelachse L auf der Auflage 1 kann alternativ ein einseitiges Aufrollen des Gassackes G erfolgen. Eine einseitige Vorfaltung zeigt auch das Ausführungsbeispiel der Figur 8B, gemäß der der Gassack G mehrfach umgeschlagen wurde, und zwar mit wechselnder Umschlagrichtung. Analog zu der Ausführung der Figur 8A kann bei einer entsprechenden Anordnung des Gassackes G auch hier eine beidseitige Vorfaltung durch Umschlagen erfolgen.

Die in den Figuren 8A und 8B gezeigten Faltvarianten können jeweils manuell durchgeführt werden.

Im Ausführungsbeispiel der Figur 8C ist der Gassack G mittels seitlicher Falt- bzw. Raffelemente 41, 42, die beispielsweise durch die seitlichen Begrenzungselemente 41, 42 der Figuren 1A und 1 B gebildet werden können, zu einer (entlang der Längsachse x) längserstreckten Form zusammengerafft worden, und zwar durch Zusammenraffen entlang der horizontalen Querachse y. Hierfür ist es zweckmäßig, den Faltraum durch vorheriges Aufbringen (Absenken) der Abdeckung 5 nach oben hin zu begrenzen.

Die gezeigten Vorfaltungen haben gemeinsam, dass der Gassack G entlang der horizontalen Querachse y, also senkrecht sowohl zur vertikalen Achse z als auch zur Längsachse x, auf eine solche Breite zusammengestaucht worden ist, die in etwa der Breite des Modulgehäuses M in jener Richtung y entspricht. Damit muss der vorgefaltete Gassack G entlang der horizontalen Querachse y nicht weiter zusammengerafft werden, um ihn im Modulgehäuse M verstauen zu können.

Abgesehen von der angedeuteten (gestrichelten, gepunkteten bzw. gestrichelt/gepunkteten) Darstellung eines flach auf der Auflage 1 ausgebreiteten Gassackes beziehen sich die Darstellungen des Gassackes G in den Figuren 1A ff. jeweils auf einen bereits vorgefalteten Gassack, z. B. entsprechend einem der Faltprofile der Figuren 8A bis 8C, welcher vorliegend eine längserstreckte Form aufweist.

Soweit nachfolgend vom äußeren Rand des Gassackes G gesprochen wird, ist hiermit nicht der ringförmig umlaufende äußere Rand des flach ausgebreiteten Gassackes gemeint, wie er in Figur 1A in gestrichelter, gepunkteter oder strichpunktierter Darstellung erkennbar ist, sondern vielmehr der ringförmig umlaufende äußere Rand des bereits längserstreckt vorgefalteten Gassackes G, welcher als äußerer Rand R in Figur 1A in durchgezogener Linie ringförmig entlang des vorgefalteten Gassackes G umläuft.

In entsprechender Weise bezieht sich die Oberseite oder Unterseite des Gassackes G jeweils auf die Ober- und Unterseite des vorgefalteten Gassackes G, und zwar entlang der vertikalen Achse z betrachtet.

In den Figuren 2A und 2B ist die Faltvorrichtung aus den Figuren 1A und 1 B in einem Zustand gezeigt, in dem der jeweilige Niederhalter 31, 32, der an jedem der beiden Raffelemente 21, 22 vorgesehen ist, entlang der Längsachse x ausgefahren worden ist, so dass er nun entlang jener Längsachse x vom zugeordneten Raffelement 21 bzw. 22 absteht.

Wie insbesondere anhand Figur 2B deutlich wird, steht der jeweilige Niederhalter 31, 32 von dem zugeordneten Raffelement 21, 22 in einer solchen vertikalen Höhe ab, dass sich der jeweilige Niederhalter 31, 32 mit seiner der Auflage 1 zugewandten Unterseite 33 bzw. 34 oberhalb des dem jeweiligen Raffelement 21, 22 benachbarten Randbereiches R1, R2 des äußeren Randes R des Gassackes G erstreckt. D. h., der jeweilige Niederhalter 31, 32 übergreift einen Randbereich R1, R2 des Gassackes G, der benachbart zu seinem zugeordneten Raffelement 21, 22 verläuft. Der gewählte vertikale Abstand der Unterseite 33, 34 eines jeweiligen Niederhalters 31, 32 von der Auflage 1 ist dabei unter anderem abhängig von der vertikalen Ausdehnung (Dicke) des jeweiligen zu übergreifenden Randbereiches R1, R2 des gegebenenfalls vorgefalteten Gassackes G. Je stärker der Gassack G vorgefaltet ist, desto größer kann dessen vertikale Ausdehnung entlang der vertikalen Achse z sein und desto größer muss dementsprechend der vertikale Abstand der Unterseite 33, 34 eines jeweiligen Niederhalters 31, 32 von der Auflage 1 sein. Hierfür kann in einer Weiterbildung vorgesehen sein, dass die vertikale Position der Niederhalter 31, 32 entlang der vertikalen Achse z einstellbar ist.

Weiterhin weisen die Niederhalter 31, 32 entlang der vertikalen Achse z eine solche (geringe) Ausdehnung (Höhe) auf, dass die Oberseite 35, 36 des jeweiligen Niederhalters 31, 32 von der den Faltraum nach oben begrenzenden Abdeckung 5 substanziell beabstandet ist, vergleiche Figur 3B.

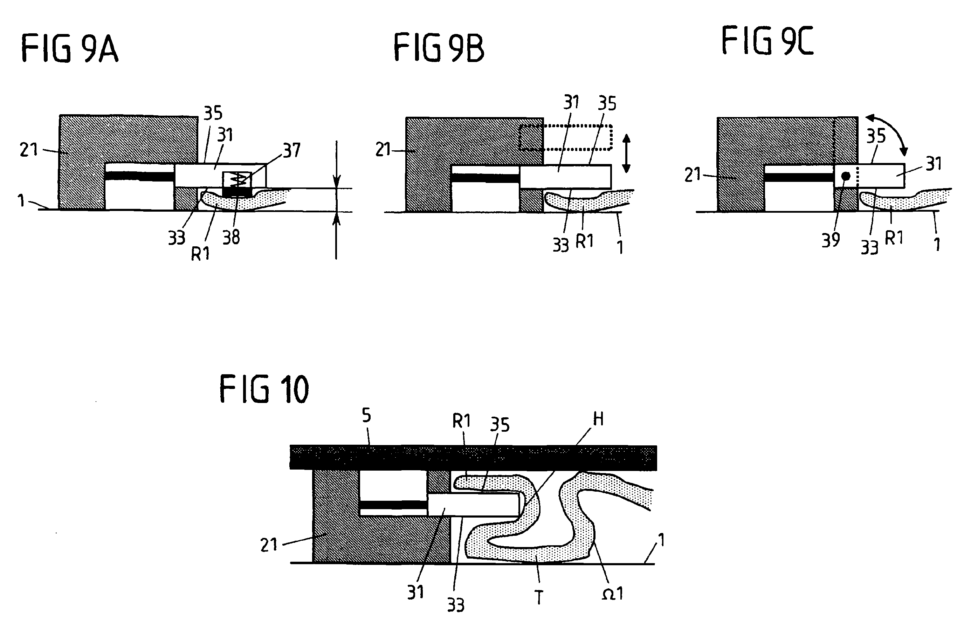

Vorliegend dienen die Niederhalter 31, 32 nicht nur dazu, einen jeweils zugeordneten Randbereich R1, R2 am äußeren Rand R des Gassackes G zu übergreifen, sondern sie dienen auch zur Fixierung des jeweiligen Randbereiches R1, R2 am daneben liegenden Raffelement 21 bzw. 22. Konkret werden die entlang der Längsachse x voneinander beabstandeten und einander gegenüberliegenden Randbereiche R1, R2 des äußeren Randes R des vorgefalteten Gassackes G jeweils an einem der Raffelemente 21, 22 festgelegt. Verschiedene Varianten, wie eine solche Fixierung konkret realisiert werden kann, sind in den Figuren 9A bis 9C dargestellt, die jeweils einen Ausschnitt aus Figur 2B im Bereich eines Raffelementes 21 und des hiervon abstehenden Niederhalters 31 zeigen.

In dem Ausführungsbeispiel gemäß Figur 9A wirkt der jeweilige Niederhalter (z. B. 31) über ein mittels eines Federelementes 37 elastisch vorgespannten Klemmelementes 38 auf den zugeordneten Randbereich (z. B. R1) des Gassackes G ein, um diesen zwischen dem Niederhalter (31) und der Auflage 1 zu verklemmen.

Gemäß dem Ausführungsbeispiel der Figur 9B ist der jeweilige Niederhalter (31) entlang der vertikalen Achse z verfahrbar, um einen Randbereich (R1) des Gassackes G zwischen jenem Niederhalter, genauer dessen Unterseite (33), und der Auflage 1 verklemmen zu können. Im Ausführungsbeispiel der Figur 9C ist der jeweilige Niederhalter (31) für den entsprechenden Zweck (um ein Gelenk 39) verschwenkbar am zugeordneten Raffelement (21) gelagert.

Somit fallen bei den Ausführungsbeispielen der Figuren 9B und 9C die zur Fixierung eines jeweiligen Randbereiches R1, R2 des Gassackes G an einem Raffelement 21, 22 dienenden Fixierelemente mit dem jeweiligen Niederhalter 31, 32 zusammen, während gemäß dem Ausführungsbeispiel der Figur 9A separate Fixiermittel 37, 38 in Form einer Klemmeinrichtung vorgesehen sind.

Insbesondere die in Figur 9A und Figur 9B gezeigten Fixierelemente (in Form einer separaten Klemmeinrichtung 37, 38 bzw. in Form eines vertikal verfahrbaren Niederhalters 31) eignen sich dabei auch zum Fixieren von Randbereichen R1, R2 unterschiedlicher vertikaler Ausdehnung (Dicke) entlang der vertikalen Achse z.

Selbstverständlich können neben den beispielhaft anhand der Figuren 9A bis 9C gezeigten Fixierelementen auch andere Fixiermittel zum Einsatz kommen, um einen jeweiligen Randbereich R1, R2 des Gassackes an einem daneben angeordneten Raffelement 21, 22 festzulegen.

Nach dem Festlegen der entlang der Längsachse x einander gegenüberliegenden Randbereiche R1, R2 des längserstreckt vorgefalteten Gassackes G an je einem Raffelement 21, 22 wird der Faltraum 15 zur Durchführung einer anschließenden Rafffaltung begrenzt, vergl. Figuren 3A und 3B.

Hierzu werden zum einen die seitlichen Begrenzungselemente 41, 42 der Faltvorrichtung (mittels zugeordneter maschinell, z.B. elektromotorisch oder pneumatisch, betriebener Schieber), entlang der horizontalen Querachse y aufeinander zu bewegt, bis deren Abstand der Breite des Modulgehäuses M entlang der horizontalen Querachse y entspricht, damit der im Faltraum 15 vorgefaltete Gassack anschließend in jenem Modulgehäuse M verstaut werden kann. Im Ausführungsbeispiel wirken die seitlichen Begrenzungselemente 41, 42 beim Zusammenfahren entlang der horizontalen Querachse y nicht substantiell auf den Gassack G ein, da dieser bereits derart vorgefaltet worden ist, dass dessen Ausdehnung entlang der horizontalen Querachse y bereits im Wesentlichen der Breite des Modulgehäuses M entspricht. Alternativ kann jedoch der Gassack G auch erst beim Zusammenfahren der beiden seitlichen Begrenzungselemente 41, 42 in eine längserstreckte Form vorgefaltet werden; in diesem Fall dienen die seitlichen Begrenzungselemente 41, 42 zugleich als Falt- bzw. Raffelemente.

Weiterhin wird das Höhenprofil des Faltraumes 15 festgelegt, indem eine Abdeckung 5 in einem definierten Abstand entlang der vertikalen Achse z oberhalb der Auflage 1 positioniert wird. Die Abdeckung 5 besteht vorliegend aus einer Abdeckplatte 50 mit einer zentralen Öffnung, in der ein Packstempel 55 positioniert ist. Der Packstempel 55 ist dem in einem Freiraum unterhalb der Auflage 1 vorgesehenen Modulgehäuse M gegenüberliegend angeordnet und weist in der Ebene senkrecht zur vertikalen Achse z solche Abmaße auf, dass hiermit der Gassack G nach dem Zusammenraffen in das Modulgehäuse M hineingedrückt werden kann.

Das Absenken der Abdeckung 5 auf eine definierte Höhe oberhalb der Auflage 1, um das Höhenprofil des Faltraumes 15 festzulegen, kann gemäß einer Abwandlung des dargestellten Ausführungsbeispiels auch bereits vor dem Fixieren der Randbereiche R1, R2 des vorgefalteten Gassackes G an den Raffelementen 21, 22 erfolgen. In diesem Fall wird jene Fixierung zweckmäßig rein maschinell vorgenommen, da ein manueller Zugang zum Faltraum 15 nach dem Absenken der Abdeckung 5 - je nach Konstruktion im Einzelfall - erschwert oder sogar unmöglich ist. Für mögliche Ausgestaltungen der Fixiermittel wird auf die bereits beschriebenen Varianten der Figuren 9A bis 9C verwiesen.

Nach der Definition des Faltraumes 15 werden sodann gemäß den Figuren 4A und 4B die beiden entlang der Längsachse x einander gegenüberliegenden Raffelemente 21, 22 (mittels zugeordneter maschinell, z.B. elektromotorisch oder pneumatisch, betriebener Schieber) entlang jener Achse x aufeinander zu bewegt, wobei der entlang der horizontalen Querachse y bereits vorgefaltete Gassack nun auch entlang der Längsachse x zusammengedrückt, genauer zusammengerafft, wird. Hierbei wird dem Gassack G dadurch eine besondere Form aufgezwungen, dass einerseits dessen entlang der Längsachse x einander gegenüberliegende Randbereiche R1, R2 jeweils am zugeordneten Raffelement 21, 22 festgelegt sind, wobei sie von jeweils einem Niederhalter 31, 32 übergriffen werden, und dass jene Raffelemente 21, 22 insbesondere über die hiervon entlang der Längsachse x abstehenden Niederhalter 31, 32 auf den Gassack G einwirken, um diesen zusammenzuraffen.

Bei dem Zusammendrücken des Gassackes G entlang der Längsachse x durch Verfahren der Raffelemente 21, 22 verbleiben die Endabschnitte der äußeren Randbereiche R1, R2 des Gassackes G jeweils unterhalb des Niederhalters 31, 32 des zugeordneten Raffelementes 21, 22. Genauer sind jene während des Raffvorganges dauerhaft zwischen der Unterseite 33, 34 des jeweiligen Niederhalters 31, 32 und der Auflage 1 aufgenommen; dies ist durch die Fixierung der Randbereiche R1, R2 des Gassackes G am jeweiligen Raffelement 21, 22 gewährleistet.

Durch die vertikale Begrenzung des Faltraumes 15 nach oben, mittels der Abdeckung 5, führt das Einwirken der Raffelemente 21, 22 auf den Gassack G über die von den Raffelementen 21, 22 entlang der Längsachse x nach vorne abstehenden Niederhalter 31, 32 weiterhin dazu, dass in dem sich bildenden Gassackpaket (am jeweiligen Randbereich R1, R2) ein Hinterschnitt H erzeugt wird und somit jeweils ein sich an den zugeordneten Randbereich R1, R2 des Gassackes G anschließender Abschnitt über den entsprechenden Niederhalter 31, 32 legt und zwischen dessen Oberseite 35 bzw. 36 und der Abdeckung 5 aufgenommen wird.

Wegen der zusätzlichen Fixierung des Gassackes G in seinem zentralen Bereich am Modulgehäuse M weisen die sich an die Randbereiche R1, R2 nach Innen hin anschließenden Gassackabschnitte zusammen mit jenen Randbereichen im zusammengefalteten Zustand im Schnitt annäherungsweise die Form eines Ω auf, weshalb sie hier auch als Omega-Falten Ω1, Ω2 bezeichnet werden. Wegen der bereits erläuterten Fixierung der Randbereiche R1, R2 des Gassackes zwischen einem jeweiligen Niederhalter 31, 32 und der Auflage 1 sowie wegen der Beabstandung der Oberseite 35, 36 eines jeweiligen Niederhalters 31, 32 von der Abdeckung 5, so dass beim Zusammenraffen des Gassackes G ein Gassackabschnitt hierzwischen aufgenommen werden kann, sind im Ausführungsbeispiel der Figuren 4A und 4B die Ausbauchungen T der jeweiligen Omega-Falte Ω1, Ω2 der Abdeckung 5 zugewandt und liegen an dieser an.

Die Raffelemente 21, 22 werden beim Zusammendrücken des Gassackes G entlang der Längsachse x so weit zusammengefahren, dass die Ausdehnung des zusammengedrückten Gassackes G entlang jener Achse x der Länge des Modulgehäuses M entspricht. Hierdurch lässt sich der Gassack G anschließend problemlos im Modulgehäuse M verstauen.

Die gewünschte Faltenform des zusammengerückten Gassackes G lässt sich dabei beispielsweise durch die Eindringtiefe (Länge) der Niederhalter 31, 32 entlang der Längsachse x, durch die Positionierung der Niederhalter 31, 32 entlang der vertikalen Achse z sowie deren Dicke entlang jener Achse z und weiterhin durch das Höhenprofil (also insbesondere die vertikale Ausdehnung h) des Faltraumes 15 variieren.

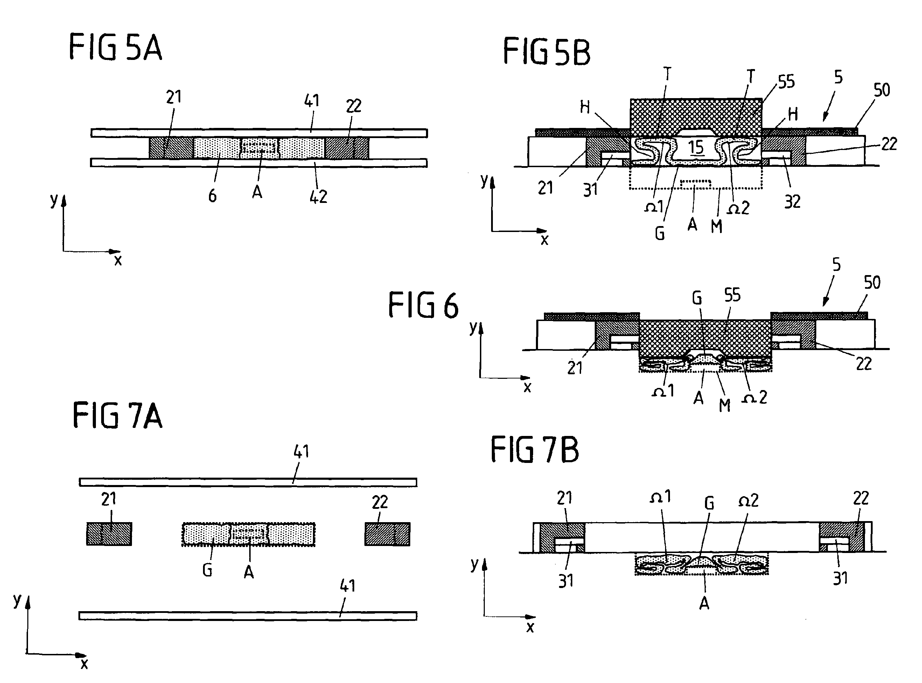

Nach dem Zusammendrücken des Gassackes G entlang der Längsachse x auf eine Ausdehnung, die der Länge des Modulgehäuses M entlang der x-Achse entspricht, werden zunächst die Niederhalter 31, 32 wieder eingefahren, so dass diese nicht mehr in den gefalteten Gassack G hineinragen, vergleiche Figuren 5A und 5B.

Anschließend wird der Gassack G mittels des hierfür vorgesehenen Packstempels 55 in dem Modulgehäuse M verstaut, indem der Packstempel 55 gemäß Figur 6 entgegen der vertikalen Achse z in Richtung auf die Auflage 1 verfahren wird, wobei er auf den zusammengefalteten Gassack G einwirkt und diesen in das Modulgehäuse M hineindrückt. Hierbei werden die Omega-Falten Ω1, Ω2 flach zusammengedrückt; jedoch verbleiben deren (nunmehr abgeflachte) Ausbauchungen T an der (der Abdeckung 5 bzw. genauer dem Packstempel 55) zugewandten Oberseite des nun im Modulgehäuse M verstauten Gassackes G. Mit anderen Worten ausgedrückt, verlaufen die zusammengedrückten Ausbauchungen T der Omega-Falten Ω1, Ω2 unmittelbar unterhalb der oberen Öffnung des Modulgehäuses M, durch die hindurch der Gassack G mittels des Packstempels 55 in das Modulgehäuses M hineingedrückt worden ist.

Abschließend werden nach den Figuren 7A und 7B die Raffelemente 21, 22, die seitlichen Begrenzungselemente 41, 42 sowie die Abdeckung 5 entlang ihrer jeweiligen Bewegungsrichtung x, y oder z jeweils so verfahren, dass der Faltraum 15 für eine Entnahme des Modulgehäuses M zusammen mit dem darin zusammengestauchten Gassack G frei liegt.

Figur 10 zeigt eine Abwandlung des in den Figuren 1A bis 7B dargestellten Ausführungsbeispieles hinsichtlich der Anordnung eines jeweiligen Randabschnittes (z. B. R1) des Gassackes G bezüglich des zugeordneten Raffelementes (z. B. 21) und des zugehörigen Niederhalters (z. B. 31).

Im Fall der Figur 10 ist der betrachtete Randbereich R1 des längserstreckt vorgefalteten Gassackes zwischen dem zugeordneten Niederhalter 31 und der Abdeckung 5, genauer zwischen der Oberseite 35 des Niederhalters 31 und der Abdeckplatte 50 der Abdeckung 5, angeordnet. In diesem Fall wird der Endabschnitt des Randbereiches R1 des vorgefalteten Gassackes G von dem Niederhalter 31 nicht - wie im Fall der Figuren 1A bis 7B - übergriffen sondern vielmehr untergriffen.

Eine Fixierung des Randbereiches R1 zwischen dem Niederhalter 31 und der Abdeckung 5 kann dabei in der Weise erfolgen, dass der Randabschnitt R1 auf den Niederhalter 31 bzw. dessen Oberseite 35 gelegt wird, bevor die Abdeckung 5 zur Begrenzung des Höhenprofils des Faltraums 15 abgesenkt wird. Beim Absenken der Abdeckung 5 erfolgt dann ein Einklemmen des Randbereiches R1 des Gassackes G zwischen dem Niederhalter 31 bzw. dessen Oberseite 35 und der Abdeckung 5 bzw. genauer deren Abdeckplatte 50.

Alternativ können auch die anhand der Figuren 9A bis 9C beschriebenen Maßnahmen zur Fixierung des betrachteten Randbereiches R1 des Gassackes G am zugeordneten Raffelement 21 herangezogen werden mit dem Unterschied, dass die Fixierung des Randbereiches R1 nicht unterhalb sondern vielmehr oberhalb des Niederhalters 31 erfolgt. Im Gegensatz zu dem Ausführungsbeispiel der Figuren 1A bis 7B wird bei der Anordnung der Figur 10 der Gassack im Bereich der sogenannten Omega-Falten Ω1, Ω2 mit seinem ausgebauchten Abschnitt T gegen die Auflage 1 gedrückt.

Der in den Figuren 1A bis 7B sowie in Figur 10 jeweils schematisch schlauchförmig dargestellte Gassack soll dabei, wie beispielhaft in den Figuren 8A bis 8C gezeigt, den bereits zu einer längserstreckten Form vorgefalteten Gassack repräsentieren. D.h., das schematisch schlauchförmig dargestellte Element G aus den Figuren 1A bis 7B sowie aus Figur 10 repräsentiert jeweils einen zu einer längserstreckten Form vorgefalteten Gassack, der im Querschnitt beispielsweise eine der Konfigurationen der Figuren 8A, 8B oder 8C aufweist. Dies wird in Figur 1A durch die dortige Querschnittslinie VIII - VIII angedeutet, welche darauf verweist, dass der Querschnitt des in Figur 1A schlauchförmig dargestellten, vorgefalteten Gassackes G einer der Figuren 8A, 8B oder 8C entsprechen kann.

Der Gassack G weist dementsprechend in einer jeweiligen Omega-Falte Ω1, Ω2 jeweils noch Sub-Falten auf, da der besagte, Omega-förmig gefaltete Gassackabschnitt ja bereits vorgefaltet ist.

Nach dem Verstauen eines gemäß Figur 10 gefalteten Gassackpaketes in einem Modulgehäuse M, vergleiche Figur 6, befinden sich die ausgebauchten Teilbereiche T der Omega-Falten Ω1, Ω2 nicht - wie im Fall der Figur 6 - im Bereich der oberen Austrittsöffnung O des Modulgehäuses M, sondern vielmehr im Bereich der gegenüberliegenden Bodenfläche des Modulgehäuses M, an der auch die Aufblaseinrichtung A angeordnet ist.

Dies bedeutet, dass bei einer Anordnung der in Figur 10 dargestellten Art die ausgebauchten Teilbereiche T der Omega-Falten nach Aktivierung der Aufblaseinrichtung A und dem hiermit verbundenen Aufblasen des Gassackes G erst mit Verzögerung aus dem Modulgehäuse M austreten können, da sich zunächst noch näher bei der Austrittsöffnung O des Modulgehäuses M gelegene Gassackabschnitte aus dem Modulgehäuse M heraus entfalten. Umgekehrt wird im Fall der in den Figuren 5B, 6 und 7B gezeigten Anordnung bei einem Aktivieren der Aufblaseinrichtung A zunächst ein Austritt der ausgebauchten Teilbereiche T der Omega-Falten Ω1, Ω2 aus der Austrittsöffnung O des Modulgehäuses M heraus erfolgen, da die ausgebauchten Teilbereiche T jener Omega-Falten Ω1, Ω2 unmittelbar an die obere Austrittsöffnung O des Modulgehäuses M grenzen. In diesem Fall treten also die ausgebauchten Teilbereiche der Omega-Falten Ω1, Ω2 besonders frühzeitig aus dem Modulgehäuse M aus, nachdem die Aufblaseinrichtung A aktiviert worden ist.

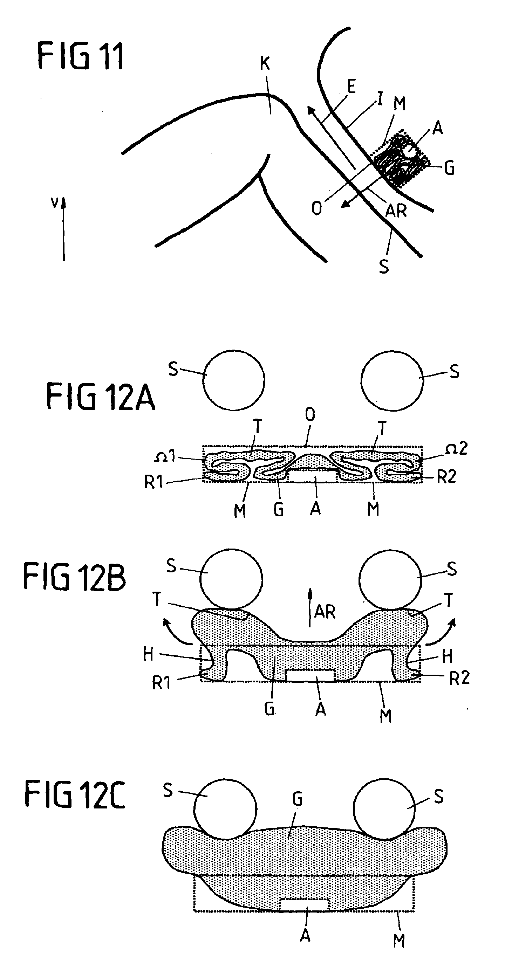

Figur 11 zeigt schematisch einen Querschnitt durch ein Airbagmodul mit einem Modulgehäuse M, mit einem darin angeordneten zusammengestauchten Gassack G sowie mit einer ebenfalls im Modulgehäuse M angeordneten Aufblaseinrichtung A, welche im Bereich der Instrumententafel I eines Kraftfahrzeugs vor den Schienbeinen S einer bestimmungsgemäß im Kraftfahrzeug sitzenden Person angeordnet sind. Das Modulgehäuse M weist eine mittels einer Abdeckung verschließbare Austrittsöffnung O auf, die an der dem zu schützenden Insassen zugewandten Seite der Instrumententafel I liegt und die beim Aufblasen und Entfalten des im Modulgehäuse M angeordneten Gassackes G in bekannter Weise geöffnet wird, z. B. indem die Abdeckung des Modulgehäuses M entlang vordefinierter Schwächungs- bzw. Aufreißlinien aufgetrennt wird. Das Modulgehäuse M liegt dabei mit seiner Austrittsöffnung O - entlang der vertikalen Fahrzeugachse v betrachtet - etwas unterhalb der mit dem Airbagmodul hauptsächlich zu schützenden Knie K des entsprechenden Fahrzeuginsassen.

Bei einem derartig angeordneten Airbagmodul soll sich der zusammengestaucht im Modulgehäuse M befindliche Gassack G durch dessen Austrittsöffnung O hindurch zunächst entlang einer Ausstoßrichtung AR (im Wesentlichen senkrecht zu der dem Fahrzeuginnenraum zugewandten Oberfläche der Instrumententafel I) in Richtung auf die Schienbeine S des zu schützenden Fahrzeuginsassen entfalten und sich dann in einer Entfaltungsrichtung E ausbreiten, die in etwa entlang den Schienbeinen des Fahrzeuginsassen verläuft, so dass Bereiche des Gassackes G vor die zu schützenden Knie K eines Fahrzeuginsassen gelangen.

Die vorstehend anhand der Figuren 1A bis 10 beschriebene Faltung eines Gassackes für ein Airbagmodul, insbesondere für ein sogenanntes Knie-Airbagmodul soll insbesondere die erste Phase der Entfaltung des Gassackes G, also bezogen auf die Darstellung der Figur 11 die Entfaltung entlang der Ausstoßrichtung AR, beeinflussen bzw. steuern.

Figur 12A zeigt einen Schnitt durch ein Airbagmodul, das zum Schutz der Knie K eines Fahrzeuginsassen prinzipiell angeordnet ist wie das in Figur 11 gezeigte Airbagmodul, wobei jedoch vorliegend der Gassack G konkret gemäß dem Ausführungsbeispiel der Figuren 1A bis 7B zu einem im Modulgehäuse M verstauten Gassackpaket zusammengestaucht worden ist.

Figur 12A zeigt dabei einen Schnitt durch ein Airbagmodul in einer Schnittebene, die durch die Ausstoßrichtung AR aus Figur 11 sowie durch die Längsachse der im Modulgehäuse M angeordneten Aufblaseinrichtung A in Form eines Rohrgasgenerators aufgespannt wird. Im nichtaktivierten Zustand des Airbagmoduls, d. h. vor dem Auslösen der Aufblaseinrichtung A zum Einblasen von Gas in den Gassack G, liegen die platt gedrückten Ausbuchtungen T des Gassackes G, hier in Form von Teilbereichen T der Omega-Falten Ω1, Ω2, an der Oberseite des Modulgehäuses M und grenzen unmittelbar an die Austrittsöffnung O des Modulgehäuses M, durch die hindurch der Gassack G beim Aufblasen und Entfalten austreten kann.

Wird die Aufblaseinrichtung A in einem Crash-Fall ausgelöst, so setzt diese Gase zum Aufblasen des Gassackes G frei, welcher hierdurch mit Gas befüllt wird und sich entsprechend entfaltet. Die Aufblaseinrichtung A kann dabei in bekannter Weise als Kaltgasgenerator zum Freisetzen eines in der Aufblaseinrichtung gespeicherten Gases oder als sogenannter Heißgasgenerator zum Freisetzen eines bei Aktivierung der Aufblaseinrichtung durch chemische Reaktion erst zu bildenden Gases ausgestaltet sein. Alternativ kann es sich weiterhin um einen Hybridgasgenerator handeln, der nach Aktivierung eine Mischung aus einem in der Aufblaseinrichtung gespeicherten Kaltgas und einem durch chemische Reaktion erzeugten heißen Gas freisetzt.

Die aus der Aufblaseinrichtung A ausströmenden Gase treten zunächst in denjenigen Abschnitt des Gassackes G ein, der an der Aufblaseinrichtung A bzw. einem hiermit kommunizierenden Diffusor anliegt. Hierzu sind entsprechende Ausströmöffnungen an den genannten Teilen vorgesehen, die mit mindestens einer Einblasöffnung am Gassack G korrespondieren.

An den an der Aufblaseinrichtung A bzw. an dem Diffusor anliegenden mittleren Gassackabschnitt schließen sich die an die Austrittsöffnung O des Airbagmodules M grenzenden Ausbuchtungen T des Gassackes G an, bei denen es sich um Teilbereiche der Omega-Falten Ω1, Ω2 handelt. Diese werden somit beim Aufblasen des Gassackes G gemäß Figur 12B frühzeitig mit Gas befüllt, treten entlang der Ausstoßrichtung AR in Richtung auf die Schienbeine S eines zu schützenden Fahrzeuginsassen aus und legen sich schnell an diese an.

Der an der Aufblaseinrichtung A bzw. an dem Diffusor anliegende Gassackabschnitt des Gassackes G entfaltet sich dabei zwischen jenen beiden Ausbuchtungen T durch die Austrittsöffnung O des Modulgehäuses M hindurch in Richtung auf den Außenraum.

Die während des Faltens des Gassackes G mittels der Niederhalter 31, 32 fixierten Randbereiche R1, R2 des Gassackes G verbleiben demgegenüber zunächst noch im Modulgehäuse, da für diese erst nach Entfaltung der Ausbuchtungen T der Weg für ein Entfalten durch die Austrittsöffnung O des Modulgehäuses M hindurch frei ist.

Schon in der in Figur 12B gezeigten frühen Phase beim Aufblasen des Gassackes G stellt dieser ein Schutzpotential für den zu schützenden Fahrzeuginsassen zur Verfügung, da die sich aus dem Modulgehäuse M heraus entfaltenden Ausbuchtungen T den vor den Schienbeinen S befindlichen Teil der Instrumententafel I, vergleiche Figur 11, abdecken und sich weiterhin an die Schienbeine S anlegen.

Bei der durch den Übergang von Figur 12B zu Figur 12C repräsentierten weiteren lateralen Entfaltung des Gassackes G, vergleiche die seitlichen Pfeile in Figur 12B, verbleiben die an den Schienbeinen S anliegenden Ausbuchtungen T des Gassackes G in ihrer frühzeitig eingenommenen Position, so dass an diesen Stellen keine substantielle Relativbewegung zwischen den zu schützenden Schienbeinen S eines Fahrzeuginsassen und den hieran anliegenden Gassackbereichen erfolgt. Dies ist das Ergebnis einer schnellen, definierten Positionierung des Gassackes G schon in einem frühen Stadium der Entfaltung, wie in Figur 12B gezeigt.

Beim abschließenden lateralen Entfalten des Gassackes, bei dem auch die Randbereiche R1, R2 durch die Austrittsöffnung O aus dem Modulgehäuse M austreten, vergrößert sich die außerhalb des Modulgehäuses M liegende und ein Schutzkissen bildende Oberfläche des Gassackes G, die nun insbesondere bis an die Knie K des zu schützenden Fahrzeuginsassen heranreicht, vergleiche Figur 11.

## Patentansprüche

1. Verfahren zum Falten eines Gassackes für ein Airbagmodul, bei dem
a) der Gassack (G) auf einer Auflage (1) angeordnet wird,
b) neben dem äußeren Rand (R) des auf der Auflage (1) angeordneten Gassackes (G) mindestens ein Raffelement (21, 22) zum Falten des Gassackes (G) vorgesehen ist und
c) der Gassack (G) mittels des mindestens einen Raffelementes (21, 22) zusammengefaltet wird, indem das Raffelement (21, 22) unter Einwirkung auf den Rand (R) des Gassackes (G) entlang der Auflage (1) in Richtung auf das Innere des auf der Auflage (1) angeordneten Gassackes (G) verfahren wird,
wobei von dem mindestens einen Raffelement (21, 22) ein Niederhalter (31, 32) absteht, der beim Verfahren des Raffelementes (21, 22) gemeinsam mit diesem bewegt wird und einen Randbereich (R1, R2) des Gassackes (G) über- oder untergreift,
**dadurch gekennzeichnet,**
**dass** der Gassack (G) vorgefaltet wird, bevor der mindestens eine gemeinsam mit dem Raffelement (21, 22) bewegbare Niederhalter (31, 32) hierauf einwirkt, und dass der mindestens eine Niederhalter (31, 32) derart auf einen Randbereich (R1, R2) des Gassackes (G) einwirkt, dass in dem Gassack (G) durch Einwirkung des Niederhalters (31, 32) ein Hinterschnitt (H) gebildet wird, wobei bei Bildung des Hinterschnittes (H) durch Einwirkung des Niederhalters (31, 32) auf den Gassack (G) Teilbereiche des Gassackes - entlang einer Richtung (z) senkrecht zur Auflage (1) betrachtet - sowohl unter dem Niederhalter (31, 32) als auch über dem Niederhalter (31, 32) liegen.

2. Verfahren nach Anspruch 1, **dadurch gekennzeichnet, dass** der Randbereich (R1, R2) des Gassackes (G) - entlang einer Richtung (z) senkrecht zur Auflage (1) - oberhalb oder unterhalb des Niederhalters (31, 32) am Raffelement (21, 22) festgelegt wird.

3. Verfahren nach Anspruch 2, **dadurch gekennzeichnet, dass** der Randbereich (R1, R2) des Gassackes am zugeordneten Raffelement (21, 22) unter Einwirkung des vom Raffelement (21, 22) abstehenden Niederhalters (31, 32) und/oder hiermit verbundener Fixiermittel (37, 38) festgelegt wird.

4. Verfahren nach einem der vorhergehenden Ansprüche, **dadurch gekennzeichnet, dass** zum Zusammenfalten des Gassackes (G) mindestens zwei Raffelemente (21, 22) auf den Gassack (G) einwirken.

5. Verfahren nach einem der vorhergehenden Ansprüche, **dadurch gekennzeichnet, dass** der Gassack (G) in einem Faltraum (15) zusammengefaltet wird, welcher oberhalb der Auflage (1) durch eine Abdeckung (5) begrenzt ist, so dass der Gassack (G) zwischen der Auflage (1) und der Abdeckung (5) zusammengefaltet wird.

6. Verfahren nach einem der vorhergehenden Ansprüche, **dadurch gekennzeichnet, dass** unterhalb der Auflage (1) ein Modulgehäuse (M) angeordnet wird, in dem der Gassack (G) nach dem Zusammenfalten verstaut wird.

7. Verfahren nach Anspruch 5 und 6, **dadurch gekennzeichnet, dass** der Gassack (G) nach dem Zusammenfalten mittels eines Stempels (55) in das Modulgehäuse (M) gedrückt wird.

8. Vorrichtung zum Falten eines Gassackes für ein Airbagmodul, mit
- einer Auflage (1), auf der der zu faltende Gassack (G) anzuordnen ist,
- mindestens einem entlang der Auflage (1) verfahrbaren Raffelement (21, 22) zum Falten des auf der Auflage (1) angeordneten Gassackes (G), indem das Raffelement unter Einwirkung auf den Rand (R) des Gassackes (G) verfahren wird, und
- einem von dem Raffelement (21, 22) abstehenden Niederhalter (31, 32), der beim Verfahren des Raffelementes (21, 22) gemeinsam mit diesem bewegbar ist,
**dadurch gekennzeichnet,**
**dass** der Niederhalter (31, 32) in einem solchen Abstand von der Auflage (1) am Raffelement (21, 22) angeordnet ist, dass er beim Verfahren des Raffelementes (21, 22) zur Bildung eines Hinterschnittes (H) auf einen Randbereich (R1, R2) des auf der Auflage (1) angeordneten Gassackes (G) einwirkt, wobei bei Bildung des Hinterschnittes (H) durch Einwirkung des Niederhalters (31, 32) auf den Gassack (G) Teilbereiche des Gassackes - entlang einer Richtung (z) senkrecht zur Auflage (1) betrachtet - sowohl unter dem Niederhalter (31, 32) als auch über dem Niederhalter (31, 32) liegen.

9. Vorrichtung nach Anspruch 8, **dadurch gekennzeichnet, dass** Mittel (31, 32, 37, 38) zur Festlegung eines Randbereiches (R1, R2) des Gassackes (G) am Raffelement (21, 22) vorgesehen sind.

10. Vorrichtung nach Anspruch 8 oder 9, **dadurch gekennzeichnet, dass** mindestens zwei Raffelemente (21, 22) zum Zusammenfalten des Gassackes (G) vorgesehen sind, insbesondere mindestens zwei einander gegenüberliegende und gegeneinander verfahrbare Raffelemente (21, 22).

11. Vorrichtung nach einem der Ansprüche 8 bis 10, **dadurch gekennzeichnet, dass** eine der Auflage (1) gegenüberliegende Abdeckung (5) vorgesehen ist, um einen Faltraum (15), innerhalb dessen der Gassack (G) zusammenzufalten ist, zu begrenzen.

12. Vorrichtung nach einem der Ansprüche 8 bis 11, **dadurch gekennzeichnet, dass** unterhalb der Auflage (1) ein Freiraum für die Anordnung eines Modulgehäuses (M) vorgesehen ist, indem der zusammengefaltete Gassack (G) zu verstauen ist.

13. Vorrichtung nach einem der Ansprüche 8 bis 12, **dadurch gekennzeichnet, dass** die Vorrichtung ausgebildet und vorgesehen ist zur Durchführung des Verfahrens nach einem der Ansprüche 1 bis 7.

14. Gassackpaket, ausgebildet und vorgesehen zur Anordnung in einem Airbagmodul eines Kraftfahrzeugs, **dadurch gekennzeichnet, dass** das Gassackpaket durch einen Gassack (G) gebildet ist, der nach einem Verfahren gemäß einem der Ansprüche 1 bis 7 gefaltet worden ist.

15. Verfahren zum Falten eines Gassackes für ein Airbagmodul, bei dem
a) der Gassack (G) auf einer Auflage (1) angeordnet wird,
b) neben dem äußeren Rand (R) des auf der Auflage (1) angeordneten Gassackes (G) mehrere Raffelemente (21, 22, 41, 42) zum Falten des Gassackes (G) vorgesehen sind und
c) der Gassack (G) mittels der Raffelemente (21, 22, 41, 42) zusammengefaltet wird, indem die Raffelemente (21, 22, 41, 42) unter Einwirkung auf den Rand (R) des Gassackes (G) entlang der Auflage (1) in Richtung auf das Innere des auf der Auflage (1) angeordneten Gassackes (G) verfahren werden,
wobei von mindestens einem der Raffelemente (21, 22, 41, 42) ein Niederhalter (31, 32) absteht, der beim Verfahren des Raffelementes (21, 22, 41, 42) gemeinsam mit diesem bewegt wird und einen Randbereich (R1, R2) des Gassackes (G) über- oder untergreift,
**dadurch gekennzeichnet,**
**dass** der mindestens eine Niederhalter (31, 32) beim Einwirken auf den Gassack (G) in das sich dabei bildende Gassackpaket eindringt und einen Hinterschnitt (H) ausbildet, wobei bei Bildung des Hinterschnittes (H) durch Einwirkung des Niederhalters (31, 32) auf den Gassack (G) Teilbereiche des Gassackes - entlang einer Richtung (z) senkrecht zur Auflage (1) betrachtet - sowohl unter dem Niederhalter (31, 32) als auch über dem Niederhalter (31, 32) liegen.

## Claims

1. Method for folding an airbag for an airbag module in which
a) the airbag (G) is disposed on a support (1),
b) at least one piling element (21, 22) for folding the airbag (G) is provided next to the exterior edge (R) of the airbag (G) disposed on the support (1) and
c) the airbag (G) is folded together by the means of the at least one piling element (21, 22) in that the piling element (21, 22) is moved by action on the edge (R) of the airbag (G) along the support (1) in the direction toward the interior of the airbag (G) disposed on the support (1),
wherein a retainer (31, 32) protrudes from the at least one piling element (21, 22), which is moved together with the piling element (21, 22) during the movement thereof and reaches over or under an edge area (R1, R2) of the airbag (G)
**characterized in that**
the airbag (G) is prefolded before the at least one retainer (31, 32) movable together with the piling element (21, 22) acts thereon, and **in that** the at least one retainer (31, 32) acts on an edge area (R1, R2) of the airbag (G) such that an undercut (H) is formed in the airbag (G) through by action of the retainer (31, 32), wherein during formation of the undercut (H) through the action of the retainer (31, 32) on the airbag (G) sections of the airbag - if looked at along a direction (z) vertical to the support (1) - are located below the retainer (31, 32) as well as above the retainer (31, 32).

2. Method according to claim 1, **characterized in that** the edge area (R1, R2) of the airbag (G) is arranged along a direction (z) vertical to the support (1) - above and below the retainer (31, 32) on the piling element (21, 22).

3. Method according to claim 2, **characterized in that** the edge area (R1, R2) of the airbag is arranged on the assigned piling element (21, 22) by impact of the retainer (31, 32) protruding from the piling element (21, 22) and/or fixing means (37, 38) connected therewith.

4. Method according to one of the preceding claims, **characterized in that** at least two piling elements (21, 22) act on the airbag (G) for folding the airbag (G).

5. Method according to one of the preceding claims, **characterized in that** the airbag (G) is folded in a folding space (15), which is delimited by a cover (5) above the support (1) so that the airbag (G) is folded between the support (1) and the cover (5).

6. Method according to one of the preceding claims, **characterized in that** a module housing (M) is provided below the support (1) in which the airbag (G) is stowed after the folding.

7. Method according to claim 5 and 6, **characterized in that** the airbag (G) is pushed into the module housing (M) after folding by the means of a punch (55).

8. Device for folding an airbag for an airbag module with
- a support (1) on which the airbag (G) to be folded is to be arranged,
- at least one piling element (21, 22) movable along the support (1) for folding the airbag (G) arranged on the support (1) by moving the piling element is moved by acting on the edge (R) of the airbag (G), and
- a retainer (31, 32) protruding from the piling element (21, 22) which is movable together with the piling element (21, 22) during the movement thereof,
**characterized in that**
the retainer (31, 32) is arranged in such a distance from the support (1) on the piling element (21, 22) so that it acts on an edge area (R1, R2) of the airbag (G) arranged on the support (1) for forming an undercut (H) during movement of the piling element (21, 22), wherein during formation of the undercut (H) by action of the retainer (31, 32) on the airbag (G) sections of the airbag - if looked at along a direction (z) vertical to the support (1) - are located below the retainer (31, 32) as well as above the retainer (31, 32).

9. Device according to claim 8, **characterized in that** means (31, 32, 37, 38) are provided for arranging an edge area (R1, R2) of the airbag (G) on the piling element (21, 22).

10. Device according to one of the claim 8 or 9, **characterized in that** at least two piling elements (21, 22) are provided for folding the airbag (G), in particular at least two piling elements (21, 22) opposing each other and being movable against each other.

11. Device according to one of the claims 8 to 10, **characterized in that** a cover (5) is provided opposite to the support (1) for delimiting a folding space (15) inside which the airbag (G) is folded.

12. Device according to one of the claims 8 to 11, **characterized in that** below the support (1) a free space is provided for the arrangement of a module housing (M) in which the folded airbag (G) is to be stowed.

13. Device according to one of the claims 8 to 12, **characterized in that** the device is designed and provided for conducting a method according to one of the claims 1 to 7.

14. Airbag package designed and provided for arrangement in an airbag module of a motor vehicle, **characterized in that** the airbag package is formed by an airbag (G) which was folded by a method according to one of the claims 1 to 7.

15. Method for folding an airbag for an airbag module in which
d) the airbag (G) is disposed on a support (1),
e) multiple piling elements (21, 22, 41, 42) for folding the airbag (G) are provided next to the exterior edge (R) of the airbag (G) disposed on the support (1) and
f) the airbag (G) is folded together by the means of the piling elements (21, 22, 41, 42) by moving the piling elements (21, 22, 41, 42) by action on the edge (R) of the airbag (G) along the support (1) in the direction toward the interior of the airbag (G) disposed on the support (1),
wherein a retainer (31, 32) protrudes from at least one of the piling elements (21, 22, 41, 42), which is moved together with the piling element (21, 22, 41, 42) during the movement thereof and reaches over or under an edge area (R1, R2) of the airbag (G)
**characterized in that**
the at least one retainer (31, 32) penetrates during action on the airbag (G) into the forming airbag package and forms an undercut (H), wherein during formation of the undercut (H) by action of the retainer (31, 32) on the airbag (G) sections of the airbag - if looked at along a direction (z) vertical to the support (1) - are located below the retainer (31, 32) as well as above the retainer (31, 32).

## Revendications

1. Procédé pour le pliage d'un sac gonflable pour un module d'airbag, dans lequel
a) le sac gonflable (G) est agencé sur un support (1),
b) à côté de la bordure extérieure (R) du sac gonflable (G) agencé sur le support (1) il est prévu au moins un élément de fronçage (21, 22) pour le pliage du sac gonflable (G), et
c) le sac gonflable (G) est replié au moyen dudit au moins un élément de fronçage (21, 22), en déplaçant l'élément de fronçage (21, 22) le long du support (1) en direction de l'intérieur du sac gonflable (G) agencé sur le support (1) en agissant sur la bordure (R) du sac gonflable (G),
dans lequel un élément de maintien vers le bas (31, 32) dépasse dudit au moins un élément de fronçage (21, 22), lequel est déplacé conjointement avec l'élément de fronçage (21, 22) lors du déplacement de celui-ci, et engage une zone de bordure (R1, R2) du sac gonflable (G) par le dessus ou par le dessous,
**caractérisé en ce que**
le sac gonflable (G) est préalablement plié, avant que ledit au moins un élément de maintien vers le bas (31, 32) déplaçable conjointement avec l'élément de fronçage (21, 22) agisse sur ledit sac gonflable, et **en ce que** ledit au moins un élément de maintien vers le bas (31, 32) agit sur une zone de bordure (R1, R2) du sac gonflable (G) de telle manière qu'il se forme une contre-dépouille (H) dans le sac gonflable (G) par action de l'élément de maintien vers le bas (31, 32), et dans lequel lors de la formation de la contre-dépouille (H) par action de l'élément de maintien vers le bas (31, 32) sur le sac gonflable (G), des zones partielles du sac gonflable sont situées - vues le long d'une direction (z) perpendiculaire au support (1) - aussi bien au-dessous de l'élément de maintien vers le bas (31, 32) qu'au-dessus de l'élément de maintien vers le bas (31, 32).

2. Procédé selon la revendication 1, **caractérisé en ce que** la zone de bordure (R1, R2) du sac gonflable (G) est immobilisée sur l'élément de fronçage (21, 22), le long d'une direction (z) perpendiculaire au support (1), au-dessus ou au-dessous de l'élément de maintien vers le bas (31, 32).

3. Procédé selon la revendication 2, **caractérisé en ce que** la zone de bordure (R1, R2) du sac gonflable est immobilisée sur l'élément de fronçage (21, 22) associé sous l'action de l'élément de maintien vers le bas (31, 32) qui dépasse de l'élément de fronçage (21, 22) et/ou d'un organe de fixation (37, 38) relié à celui-ci.

4. Procédé selon l'une des revendications précédentes, **caractérisé en ce qu'**au moins deux éléments de fronçage (21, 22) agissent sur le sac gonflable (G) pour le repliage du sac gonflable (G).

5. Procédé selon l'une des revendications précédentes, **caractérisé en ce que** le sac gonflable (G) est replié dans une chambre de pliage (15) qui est limitée au-dessus du support (1) par un couvercle (5), de sorte que le sac gonflable (G) est replié entre le support (1) et le couvercle (5).

6. Procédé selon l'une des revendications précédentes, **caractérisé en ce qu'**un boîtier de module (M) est agencé au-dessous du support (1), boîtier dans lequel le sac gonflable (G) est rangé après le repliage.

7. Procédé selon la revendication 5 et 6, **caractérisé en ce que** le sac gonflable (G) est pressé dans le boîtier de module (M) après le repliage au moyen d'un poinçon (55).

8. Dispositif pour plier un sac gonflable pour un module d'airbag, comprenant
- un support (1) sur lequel il s'agit d'agencer le sac gonflable (G) à plier,
- au moins un élément de fronçage (21, 22) déplaçable le long du support (1) pour plier le sac gonflable (G) agencé sur le support (1), en déplaçant l'élément de fronçage en agissant sur la bordure (R) du sac gonflable (G), et
- un élément de maintien vers le bas (31, 32), qui dépasse de l'élément de fronçage (21, 22) et qui est déplaçable conjointement avec l'élément de fronçage (21, 22) lors du déplacement de celui-ci,
**caractérisé en ce que**
l'élément de maintien vers le bas (31, 32) est agencé sur l'élément de fronçage (21, 22) à une distance telle du support (1) que, lors du déplacement de l'élément de fronçage (21, 22), il agit pour former une contre-dépouille (H) sur une zone de bordure (R1, R2) du sac gonflable (G) agencé sur le support (1), et dans lequel lors de la formation de la contre-dépouille (H) par action de l'élément de maintien vers le bas (31, 32) sur le sac gonflable (G), des zones partielles du sac gonflable - vues le long d'une direction (z) perpendiculaire au support (1) - sont situées aussi bien au-dessous de l'élément de maintien vers le bas (31, 32) qu'au-dessus de l'élément de maintien vers le bas (31, 32).

9. Dispositif selon la revendication 8, **caractérisé en ce qu'**il est prévu des moyens (31, 32, 37, 38) pour immobiliser une zone de bordure (R1, R2) du sac gonflable (G) sur l'élément de fronçage (21, 22).

10. Dispositif selon la revendication 8 ou 9, **caractérisé en ce qu'**il est prévu au moins deux éléments de fronçage (21, 22) pour le repliage du sac gonflable (G), en particulier au moins deux éléments de fronçage (21, 22) situés à l'opposé l'un de l'autre et déplaçables l'un vers l'autre.

11. Dispositif selon l'une des revendications 8 à 10, **caractérisé en ce qu'**il est prévu un couvercle (5) opposé au support (1), afin de délimiter une chambre de pliage (15), à l'intérieur de laquelle il s'agit de replier le sac gonflable (G).

12. Dispositif selon l'une des revendications 8 à 11, **caractérisé en ce qu'**il est prévu au-dessous du support (1) un espace libre pour l'agencement d'un boîtier de module (M) à l'intérieur duquel il s'agit de ranger le sac gonflable replié (G).

13. Dispositif selon l'une des revendications 8 à 12, **caractérisé en ce que** le dispositif est réalisé et prévu pour mettre en oeuvre le procédé selon l'une des revendications 1 à 7.

14. Paquet formant sac gonflable, réalisé et prévu pour être agencé dans un module d'airbags d'un véhicule automobile, **caractérisé en ce que** le paquet formant sac gonflable est formé par un sac gonflable (G) qui a été plié d'après un procédé selon l'une des revendications 1 à 7.

15. Procédé pour le pliage d'un sac gonflable pour un module d'airbag, dans lequel
a) le sac gonflable (G) est agencé sur un support (1),
b) à côté de la bordure extérieure (R) du sac gonflable (G) agencé sur le support (1) il est prévu plusieurs éléments de fronçage (21, 22, 41, 42) pour le pliage du sac gonflable (G), et
c) le sac gonflable (G) est replié au moyen des éléments de fronçage (21, 22, 41, 42), en déplaçant les éléments de fronçage (21, 22, 41, 42) le long du support (1) en direction de l'intérieur du sac gonflable (G) agencé sur le support (1) en agissant sur la bordure (R) du sac gonflable (G),
dans lequel un élément de maintien vers le bas (31, 32) dépasse depuis au moins l'un des éléments de fronçage (21, 22, 41, 42), lequel est déplacé conjointement avec l'élément de fronçage (21, 22) lors du déplacement de celui-ci, et engage une zone de bordure (R1, R2) du sac gonflable (G) par le dessus ou par le dessous,
**caractérisé en ce que**
ledit au moins un élément de maintien vers le bas (31, 32) pénètre, en agissant sur le sac gonflable (G), dans le paquet de sac gonflable alors en formation et réalise une contre-dépouille (H), et dans lequel lors de la formation de la contre-dépouille (H) par action de l'élément de maintien vers le bas (31, 32) sur le sac gonflable (G), des zones partielles du sac gonflable sont situées - vues le long d'une direction (z) perpendiculaire au support (1) - aussi bien au-dessous de l'élément de maintien vers le bas (31, 32) qu'au-dessus de l'élément de maintien vers le bas (31, 32).
